# EUROPEAN PATENT SPECIFICATION

(11) **EP 2 084 972 B1**
(45) Date of publication and mention of the grant of the patent: **13.01.2016**
(21) Application number: 07851833.9
(22) Date of filing: 01.11.2007
(51) Int. Cl.: A23J 3/14, A23J 3/22, A23L 1/314

(54) **MEAT SUBSTITUTE FOOD PRODUCT AND PREPARATION METHOD THEREOF**
FLEISCHERSATZPRODUKT UND VERFAHREN ZU SEINER HERSTELLUNG
PRODUIT ALIMENTAIRE DE SUBSTITUTION DE VIANDE ET PROCÉDÉ DE PRÉPARATION

(30) Priority: 01.11.2006 MX NL06000083
(43) Date of publication of application: 05.08.2009
(73) Proprietor: Sigma Alimentos, S.A. De C.V., Nuevo León (MX)
(72) Inventor: ESPELETA VEGA, Alicia, Monterrey, Nuevo León (MX); MORA CASTILLO, César, Dalmacio, Tultepec, Estado de México (MX)
(74) Representative: Molina Garcia, Julia
(86) International application number: PCT/MX2007/000133
(87) International publication number: WO 2008/054189

(56) References cited:
- EP-A1- 1 714 595
- EP-A2- 1 493 337
- WO-A1-2006/041966
- ES-A3- 8 703 246
- MX-A- PA05 004 544
- MX-A- PA05 004 544
- US-A- 3 646 880
- US-A- 3 911 157
- US-A- 5 044 264
- US-A1- 2006 073 261

## Description

### TECHNICAL FIELD OF THE INVENTION

The present invention relates to the elaboration of food products and particularly to a process for preparing a cooked restructured meat product, such that the obtained food product has a similar texture and appearance of meat, in presentations, for example, to steak, cutlet, skirt steak, cured steak, breaded veal cutlet, breaded skirt steak, veal escalope, a shredded meat, ground meat, lump meat, meat strips or meatballs.

### BACKGROUND OF THE INVENTION

At present restructured meat products are prepared, generally, from the combination of animal protein and vegetable protein. The acceptance of these products by consumers is directly related to the organoleptic qualities such as texture, taste, sensation in the mouth and appearance.

The term texture describes a wide range of physical properties of a food product. A food product of acceptable texture is usually synonymous with the quality of the product. The texture has been defined as "the attribute of a substance resulting from a combination of physical properties and which is perceived by touch, the sense of taste, sight and hearing." The International Organization for Standardization defines the term texture as "all the theological and structural attributes (geometry and surface) of a food product that are perceived through mechanical receptors, touch and, where appropriate, through visual and auditory receptors.

The texture has received an accelerated importance in the preparation and manufacture of imitation products, meat analogues or substitutes, where very serious efforts are made to duplicate the properties of the original food substance. The use of non-traditional raw materials, synthetic flavors, fillers and stretchers all tend to alter certain textural characteristics of the finished product. Frequently, the imitation of textural properties is of much greater difficult in the replication of taste, odors, and colors. Many manipulation processes, including extrusion and texturization, have been developed to simulate properties of natural texture to give greater market acceptance of products similar to meat. It has to be taken into account that the texture-related attributes involves the appearance, the touch and the feel in the mouth, and even the interaction between the products similar to meat with the mouth, as a proper sense of mastication by the consumer, is directly related to the acceptance or not of the meat substitute product.

The microstructure of restructured meat determines whether the product has a similar quality to the meat as to texture, moisture, flavor to the palate and tenderness.

At macroscopic level, some natural meat has muscle fibers that are visually perceptible; they have a cylindrical shape and are parallel. La microstructure of these fibers contains microfibrils with a diameter in the range of microns and they are also cylindrical and parallel.

The restructured meat products obtained by the current processes are different from natural beef in several important qualities. These products are different from meat because they lack the fiber and microfibrilar structures of meat. Their similarity with meat is only superficial and they have not been widely accepted by the public.

Examples of the current solutions to provide imitation products, restructured meat or analogues with similar texture to an original meat product are described in the following patent documents.

Albert Spiel, in the U.S. patent US-4,057,656 describes a method for preparing quick cooking foods that are tasty chewable chunks, soft, light in color and of a meat-type texture, when hydrated. The method consists of pressing the vegetable protein material containing 30% or more of protein, 5% to 10% moisture content and a nitrogen solubility index of 30 to 70 at a temperature sufficient to convert the moisture into steam. The result is that the protein material is partially or substantially soft.

Edward M. McCabe, in the Mexican patent MX-165467, describes a method for processing whole soy to produce discrete chunks or pieces of an irregular shape of texturised proteinic material that are free of odors and flavors and have an appearance and meat-type texture. The method consists of acidifying whole soy, grinding them in an aqueous medium to provide an aqueous suspension or a mass of soybean particles, which is passed through a pressurized steam at high temperature under the conditions that make the texturised soy protein in the form of discrete pieces or chunks. The texturised pieces are dried and rehydrated for use in a wide variety of food product. Some additives may be incorporated such as appetizers, colorings, fat, condiments and other proteinic materials, in the pieces of texturised soy protein.

Albert Monferrer Ballester, in the publication of Spanish patent application ES-2,102,974 describes a procedure for obtaining food products similar to meat or fish. The procedure is based on a mass formed by a mixture of meat or fish with ingredients and food additives such as water, salt, starch, flour, proteins, stabilizers and others, where the internal jellification is originated by combining in the mass product prepared with a soluble salt of alginic acid, a soluble calcium salt and a pH modifier.

Paul Hargarten, in the publication of the Mexican patent application MX PA04006552 describes a process for preparing a vegetable based meat analogue. Said meat analogue can be used in a variety of vegetarian foods such as fried ground beef sandwiches and stuffed meats, the procedure involves mixing methylcellulose in a mixture of water and ice to form a cream, then blending in a modified gluten a vegetable protein product that has a high solubility in water and is capable of forming a gel under a mild heat treatment, an oil to obtain an emulsion base, and a modified food starch and flavoring ingredients to form a base of a seasoned emulsion; the base of the seasoned emulsion can be stuffed in wrappings, and then be cooked; the meat imitation based on the cooked emulsion has a high resemblance to processed meat products, with improved handling properties; the addition of the meat analogue emulsion based in vegetarian food helps improve the texture, feel in the mouth and juiciness.

Cesar Dalmacio Mora, in the publication of the Mexican patent application MXPA05004544A describes a process to prepare a meat food product by using a frying step. In a first embodiment, the process includes the steps of extruding the prepared paste in portions and frying the portions of prepared paste in oil at a temperature from 170 °C to 250 °C; in a second embodiment, the process includes the steps of extruding the prepared paste in portions, frying the portions of prepared paste in oil at a temperature from 170 °C to 250 °C, and after cooking the fried prepared paste in a convection oven at a temperature from 190 °C to 250 °C.

Matthew K. McMindes, Mitchell A. Kaestner and Michael W. Finfrock, in the publication of U.S. patent application US-2006/0035003 describe a food product based on soy protein formed by a soy protein material selected from soy protein flour, soy protein concentrate, isolate from soy protein and mixtures thereof; a humectant formed by a colorant and at least one of any of the following substances: a flavor agent, a triglyceride, an acid or acid salt of food grade, a base or base salt of food grade, and an emulsion of food grade, and water. Chunks of meat can be added to the food product based on soy protein.

Matthew K. McMindes and Eduardo Godinez, in the publication of the U.S. patent application US-2006/0035005 describes a product of restructured meat that comprises a fibrous material that contains soy protein and fiber of cotyledon soy, wherein the latter contains an amount of 1% to 8% in weight in a base free of humidity; chunks of meat and water. The preparation process consists of hydrating a fibrous material that contains soy protein and cotyledon soy fiber, adding chunks of meat with a temperature below 10 °C, and mixing the fibrous material and the meat chunks to produce a product of homogeneous and texturised meat that has a moisture content of at least 50%.

Matthew K. McMindes, Mitchell A. Kaestner and Michael W. Finfrock, in the publication of U.S. patent application US-2006/0073261 describe a process for preparing a soy protein containing food product comprising the steps of (A) hydrating a fibrous material containing soy protein and soy cotyledon fiber, wherein said soy cotyledon fiber is present in the fibrous material in an amount of from 1% to 8% by weight on a moisture free basis in water until water is absorbed; (B) adding a humectant comprising a colorant and at least one of a flavoring agent, a triglyceride oil, a food grade acid or acidic salt, a food grade base or basic salt, or a food grade emulsion; and (C) mixing the fibrous material and the humectant to produce a homogenous fibrous and texturized soy protein containing food product having a moisture content of at least 50%.

The state of the art described above involves limitations in a food industry where the texture of the product and its cost are very important, therefore, it is necessary to provide a cooked restructured meat product and processes for preparing the same, so that the food product obtained has macrofibers with a meat form, and preferably also microfibrils similar to meat and involves attributes of texture related to the appearance, the touch and the feel in the mouth and even the interaction of the analogue product with the mouth, as well as a taste, an odor and a color similar to meat.

### SUMMARY OF THE INVENTION

Referring to the aforementioned and with the aim of finding solutions to the limitations encountered, it is the object of the invention to provide a process for preparing a cooked restructured meat product, the process comprises the steps of hydrating under vacuum at least one vegetable protein mixed with water and at least one colorant; mixing at least one meat product with the mixture of hydrated and colored vegetable protein; mixing texturised units with the mixture of meat products and hydrated and colored vegetable protein obtaining a prepared paste; cooking the prepared paste, by (a) portioning the prepared paste in portions from 50 to 150 grams, rolling the portions and cooking the portions in a simultaneous and homogeneous manner on its upper and lower surface in an oven including an upper heating panel and a lower heating panel, both panels being in contact with the paste at a temperature from 100 to 150 °C, or (b) stuffing the prepared paste in a natural or artificial wrapping and cooking it in an oven or cook kettle until that the prepared paste reaches an internal temperature from 70 to 80 °C, or (c) cooking the prepared paste in a cooking pot while stirring the prepared paste until that the prepared paste reaches an internal temperature from 70 to 80 °C; and forming the cooked paste in a desired shape.

### BRIEF DESCRIPTION OF THE FIGURES

The characteristic details of the present invention are described in the following paragraphs, together with the figures related to it, in order to define the invention, but not limiting the scope of it.
Figure 1 is a block diagram of a process for preparing a paste for a restructured meat product according to this invention.
Figure 2 is a block diagram of a first embodiment of a process for cooking the prepared paste in the process of Figure 1 according to this invention.
Figure 3 shows a photograph of a cooked portion, according to the process of Figure 2, of a restructured meat product according to the invention.
Figure 4 shows a photograph under an electronic microscope amplified to 100X of a view of a cooked restructured meat product according to the invention.
Figure 5 is a block diagram of a second embodiment of a process for cooking the prepared paste in the process of Figure 1 according to this invention.
Figure 6 is a block diagram of a third embodiment of a process for cooking the prepared paste in the process of Figure 1 according to this invention.
Figure 7 is a block diagram of a fourth embodiment of a process for cooking the prepared paste in the process of Figure 1 according to this invention.
Figure 8 is a block diagram of alternative embodiments of the processes for forming the prepared paste for the processes described in Figures 2 and 7 in order to give a similar presentation of meat products according to this invention.
Figure 9 is a block diagram of alternative embodiments of the processes for forming the prepared paste for the process described in Figure 5, and in order to give a similar presentation of meat products according to this invention.
Figure 10 is a block diagram of alternative embodiments of the processes for forming the cooked paste for the process described in Figure 6, and in order to give a similar presentation of meat products according to this invention.

### DETAILED DESCRIPTION OF THE INVENTION

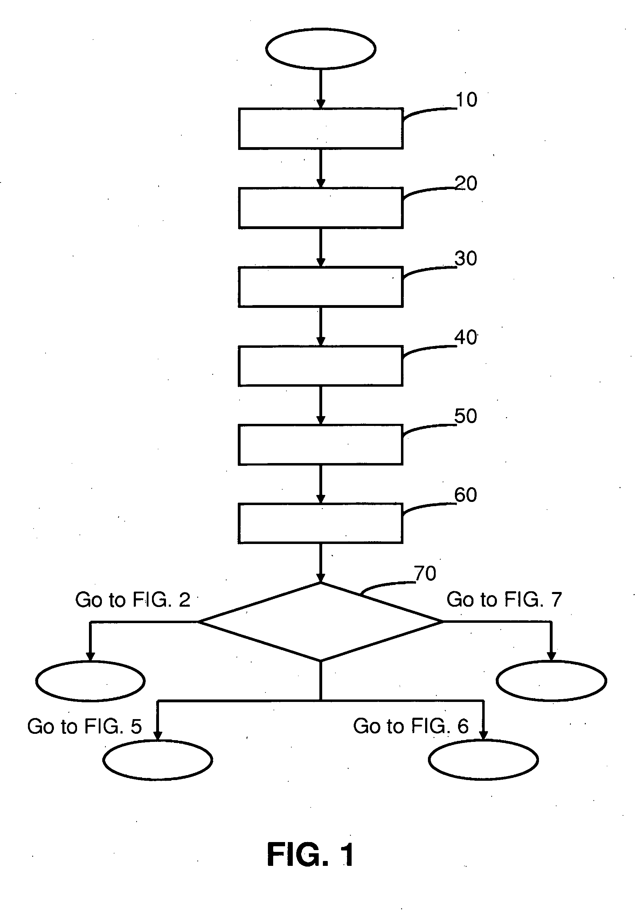

Referring to Figure 1, a process is shown to prepare a paste for restructured meat products, where the process starts in step **10**, in which a vegetable protein, of the fibrous or texturised type, whether extruded or hydrated in the form of concentrated proteinic, isolate flour, pellet, or combinations thereof, is mixed with a colorant, preferably of caramel color, and with water. The mixture and hydration is performed under vacuum in an interval of a range of 40 to 80 minutes and at a pressure within the range of -100 kPa to -50 kPa, in a mixer with paddles rotating clockwise within the range of 10 rpm to 20 rpm, and counterclockwise each turn within the range of 2 to 10 minutes. This type of mixing and hydration under vacuum with a reduced number of turns of the paddles of the mixer, allows protecting the fibers or sinews of the vegetable protein used.

Subsequently, the mixture of hydrated and colored vegetable protein is mixed with at least one meat product. The meat product may be, for example, meat chunks or minced beef, pork, turkey or chicken, giblets in chunks or chopped beef, pork, turkey or chicken, mechanically deboned meat, such as beef, pork, turkey or chicken, and mixtures thereof. The meat products together with preservatives, salt and sodium nitrite are added in a dose during mixing. This mixture is made in two stages, the first mixing stage, step **20**, is performed during a period within the range of 15 to 45 minutes in a mixer with paddles with an open lid, where the paddles rotating clockwise within the range of 10 rpm to 20 rpm, and counterclockwise each turn within the range of 2 to 10 minutes; then, a second mixing stage is started, in step **30**, in a period within the range of 10 to 20 minutes and at a pressure within a range from -100 kPa to -50 kPa in the mixer with the lid closed, but with the paddles turning clockwise within the range of 20 rpm to 40 rpm, and counterclockwise each turn within the range of 2 to 10 minutes. This two-stage mixing and dosage of the ingredients allows extracting the major amount of protein from the meat products used.

Once the hydrated and colored vegetable protein has been mixed with the meat products, it is mixed with texturised units in order to obtain a prepared paste. This mixture is blended in three stages: the first stage of mixing, step **40**, consists of mixing, during a period within the range of 5 to 20 minutes, the mixture of meat products and hydrated and colored vegetable protein with said texturised units in a mixer with the lid closed, and whose paddles rotate clockwise within the range of 10 rpm to 20 rpm, and counterclockwise each turn within the range of 2 to 10 minutes; then proceeds to perform a second mixing stage, step **50**, consisting of mixing for a period within the range of 3 to 10 minutes in the mixer with the paddles rotating clockwise within the range of 20 rpm to 40 rpm, and counterclockwise each turn within the range of 2 to 10 minutes; then proceeds to a third mixing step, step **60**, consisting of mixing under vacuum for a period from 10 to 20 and at a pressure within a range from -100 kPa to -50 kPa in the mixer, but with the paddles rotating clockwise within the range of 20 rpm to 40 rpm, and counterclockwise each turn within the range of 2 to 10 minutes. Alternatively, during step **40**, flavoring units are added in a dosed manner, which can be, for example, units with a flavor of meat, pork, turkey or chicken, and combinations thereof.

Once the paste for the restructured meat product has been prepared, in step **70**, it is processed to select a process for cooking it conforming the characteristics of the restructured meat product that is looked for.

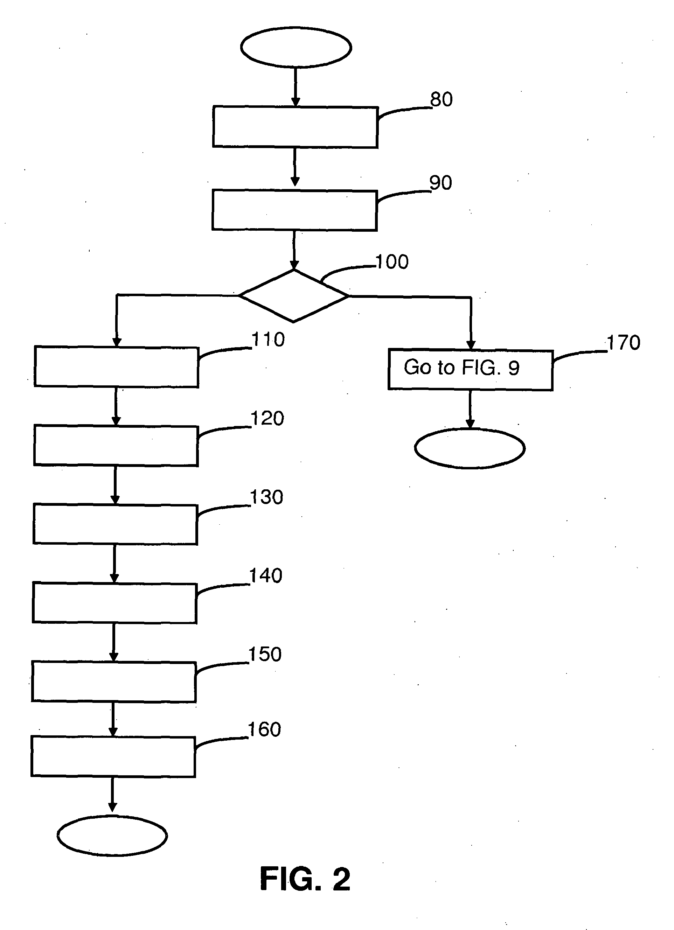

Figure 2 shows a first embodiment of a process for cooking the prepared paste. In this embodiment, the process starts in step **80**, where the prepared paste is portioned in portions that vary within a range from 50 to 150 grams. Said portions of prepared paste are transported and introduced by a conveyor chain to the inside of a oven of the type which has a upper heating panel and a lower heating panel mounted on opposite sides, and spaced from one another, so adjustable, to roll and cook, in a manner generally simultaneous and homogeneous each of the portions of prepared paste, as well their upper and lower surface when in contact with both heating panels so the portions obtain the meat color and texture, all this in step **90**. An example of this type of oven which is used in this embodiment is an electric oven TwinGrill Model TWG3600/600 Series 614.

The prepared paste portions for producing restructured meat products are subject to the following conditions of operation in said oven:
i) The residence time in the oven is about 10 seconds to about 120 seconds;
ii) The temperature of the upper and lower heating panels of the oven should be set from about 100 °C to about 150 °C, so the panels can heat the upper and lower conveyor belt of the oven at a range of temperature from about 100 °C to about 150 °C;
iii) The separation between the upper and lower conveyor belts of the oven must be adjusted in a range from 6 mm to 15 mm;
iv) Both panels being in contact with the prepared paste portions.

Once the portions of prepared paste for a restructured meat product has been rolled and cooked, in step **100**, it is proceed to select the alternative or alternatives embodiments that is or are appropriate to give a final form to the cooked paste, so that a cooked restructured meat product is obtained that has a similar presentation to an original meat product. A first alternative, step **110**, is that the restructured meat products obtained through this process of rolling and cooking, in a manner generally simultaneous and homogeneous, are products that are formed automatically with the appearance, for example, of a steak, a cutlet, a skirt steak or cured meat, that in an alternative embodiment, step **120**, are marinated in order to obtain a cooked restructured meat product with the appearance, for example, to marinated meat; or in an alternative of the embodiment, step **130**, are breaded to obtain a cooked restructured meat product with the appearance, for example, of breaded skirt steak or breaded veal cutlet, which then can be fried, in step **140**, to obtain a cooked restructured meat product with appearance, for example, of veal escalope. Then, in step **150**, the cooked and formed paste is cooled to reach a temperature of about 10 °C to about 15 °C. Alternatively, sauces are added to prepare said cooked and formed paste. Finally, in step **160**, the cooked restructured meat product is packaged.

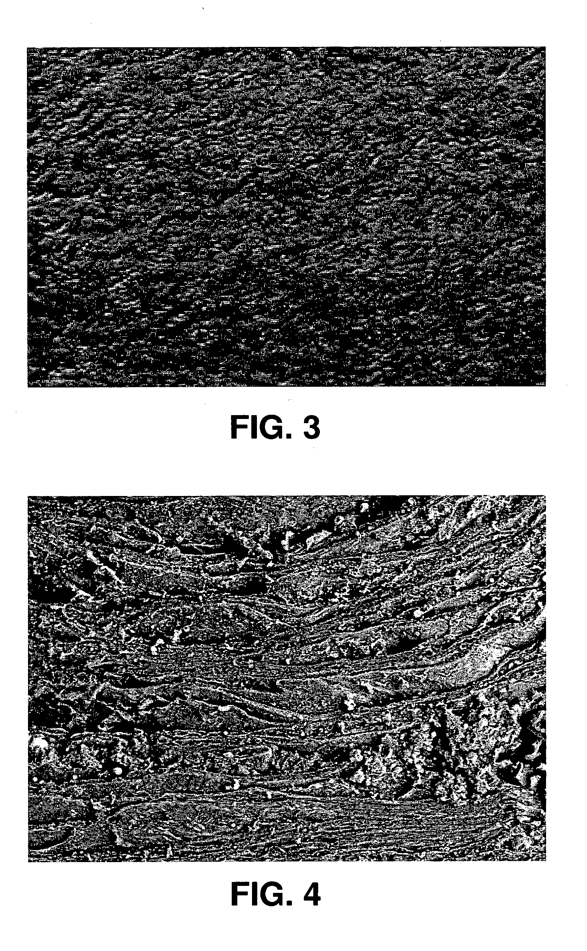

Figure 3 shows a portion of the surface of the cooked restructured meat product obtained directly by the rolling and cooking process. On the other hand, Figure 4 shows a photograph under an electronic microscope amplified to 100X of a view of a cooked restructured meat product, where the macrofibers are observed with the meat form, and also the microfibrils similar to meat that imply texture attributes related to appearance, touch and sensation in the mouth, and including the interaction of the cooked restructured meat product with the mouth, as well as flavor, odor, and color similar to meat.

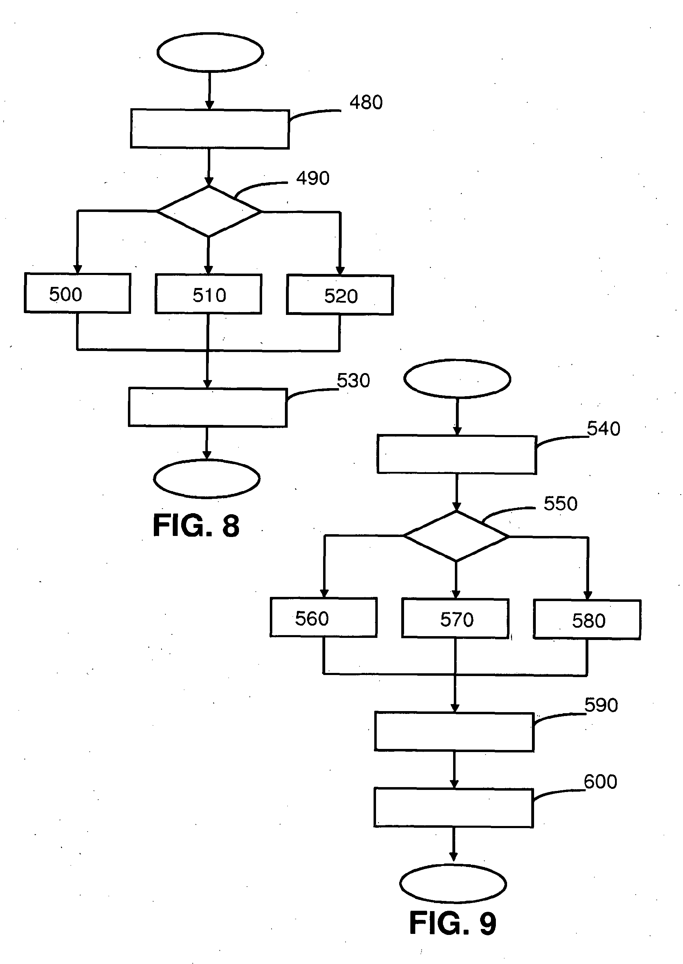

Returning to Figure 2, other alternatives to give final form to the rolled and cooked paste for a cooked restructured meat product that has a similar presentation to an original meat product, but not in the form of a steak, a cutlet, a skirt steak or cured beef, are selected in step **170**, described below in Figure 8.

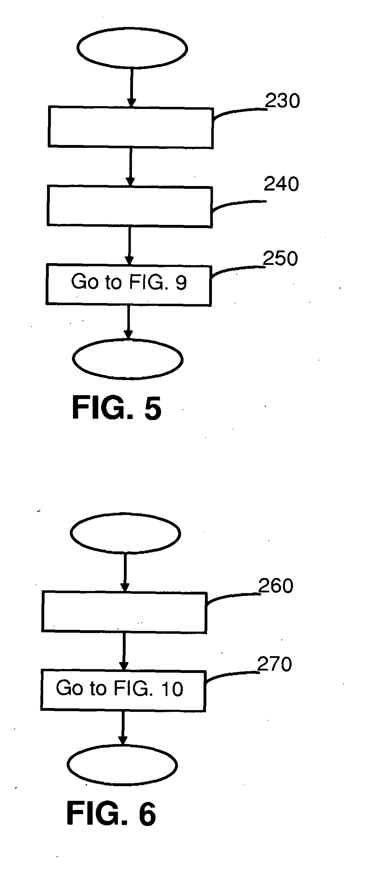

Now in the Figure 5 is show a process of a second embodiment for cooking the prepared paste according to the process described above in Figure 1. In this embodiment, the process starts in step **230**, were the prepared paste, at a temperature within the range of 0 °C to 4 °C, is stuffed in natural or artificial wrappings, edible or inedible, that subsequently, in step **240**, the stuffed paste are cooked in oven or cook kettle where the stuffed paste reaches an internal temperature of about 70 °C to about 80 °C.

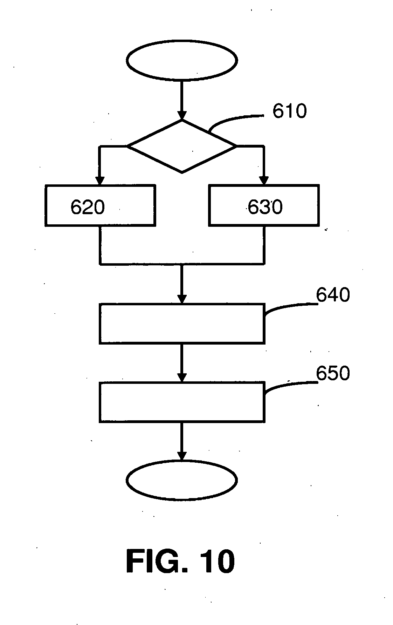

Once the prepared paste for a restructured meat product has been stuffed and cooked, in step **250**, it is proceeded to select the alternative or alternatives of the embodiment, described below in Figure 10, that is or are appropriate to give a final form to the cooked paste, in order to obtain a cooked restructured meat product that has a similar presentation to an original meat product.

Figure 6 shows a process of a third embodiment for cooking the prepared paste according to the process described above in Figure 1. In this embodiment, the process starts in step **260**, where the prepared paste is cooked in a cooking pot with stirring it, reaching an internal temperature within the range of about 70 °C to about 80 °C.

Once the prepared paste for a restructured meat product has been cooked, in step **270**, it is proceeded to select the alternative or alternatives of the embodiment, described below in Figure 10, that is or are appropriate to give a final form to the cooked paste, in order to obtain a cooked restructured meat product that has a similar presentation to an original meat product.

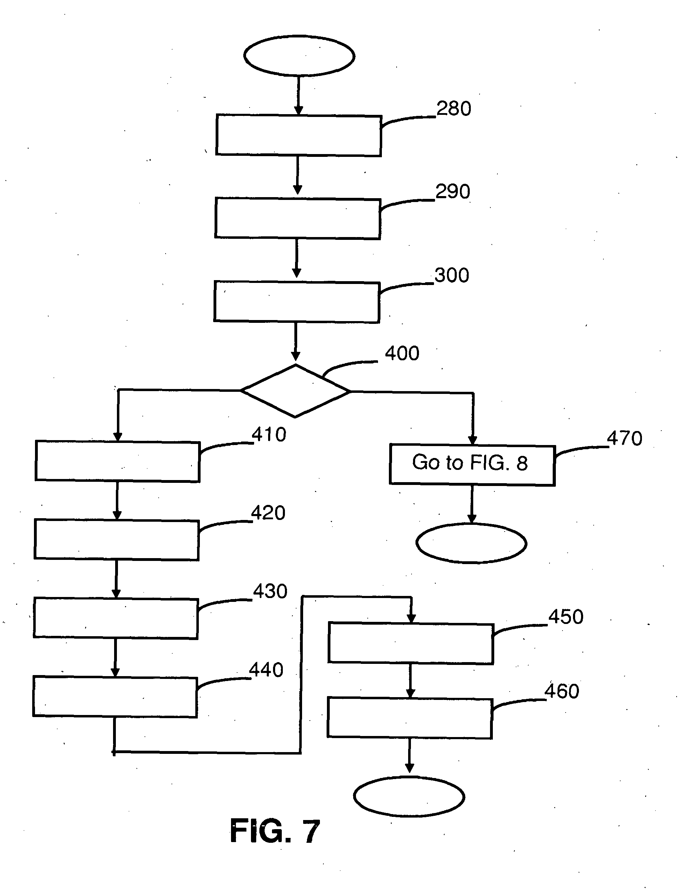

Now in the Figure 7, it is show a process of a fourth embodiment for cooking the prepared paste according to the process described above in Figure 1. In this embodiment, the process consists in cooking the prepared paste in successive stages in order to obtain a cooked restructured meat product, the process starts in step **280**, where the prepared paste is portioned in portions that vary within a range from 50 grams to 150 grams. Said portions of prepared paste are transported to a first stage of rolling and cooking, step **290**, that is performed inside an oven of the type which has an upper heating panel and a lower heating panel mounted on opposite sides, and spaced from one another, as described above.

Subsequently, in step **300**, the rolled and pre-cooked portions are fried in a fryer, or fried and cooked in a convection oven to finish cooking. It is noteworthy that the sequence between the stages of cooking may vary in order of performance and include other stages of cooking.

Once the portions of the prepared paste for a restructured meat product have been rolled and cooked, in step **400**, it is proceeded to select the alternative or alternatives of the embodiment that is or are appropriate to give a final form to the cooked paste, so that a restructured meat product is obtained that has a similar presentation to an original meat product. A first alternative, step **410**, is that the cooked restructured meat products obtained through this process of rolling and cooking, in a manner generally simultaneous and homogeneous, are products that are formed automatically with the appearance, for example, of steak, cutlet, skirt steak or cured meat, that in an alternative embodiment, in step **420**, are marinated in order to obtain a cooked restructured meat product with the appearance, for example, of marinated meat; or in an alternative embodiment, step **430**, are breaded to obtain a cooked restructured meat product with the appearance, for example, of breaded skirt steak or breaded veal cutlet, which then can be fried, in step **440**, to obtain a cooked restructured meat product with the appearance, for example, of venal escalope. Then, in step **450**, the paste that is cooked and formed, is cooled to reach a temperature of about 10 °C to about 15 °C. Alternatively, sauces are added to prepare said cooked and formed paste. Finally, in step **460**, the cooked restructured meat product is packaged.

Other alternatives to give the rolled and cooked paste a final form to obtain a cooked restructured meat product that has a similar presentation to an original meat product, but not in the form of a steak, a cutlet, a skirt steak or cured meat, are selected in step **470**, and described below in Figure 8.

Figure 8 is a block diagram of alternatives of the embodiment processes to give the cooked paste a form for the processes described above in Figures 2 and 7 in order to obtain a similar presentation of a meat product according to this invention. In this embodiment, the process starts in step **480**, where the cooked paste is cooled to reach a temperature within the range of about 0 °C to about 15 °C. Then, in step **490**, the type of form and final presentation is selected for the cooked paste to the market as a cooked restructured meat product, for example, in step **500**, the cooked paste is shredded in a meat shredder to give it the form of shredded meat; or, in step **510**, the cooked paste is cut into a food cube cutter to give it the shape of lump meat or meat strips; or, in step **520**, the cooked paste is chopped to give it the shape of ground meat. Alternatively, sauces are added to prepare said cooked and formed paste. Finally, in step **530**, the cooked restructured meat product is packaged.

Figure 9 is a block diagram of alternatives of the processes embodiment to give the cooked paste a shape for the process described above in Figure 5, and in order to obtain a similar presentation of a meat product according to this invention. In this embodiment, the process starts in step **540**, where the cooked paste is cooled to reach a temperature within the range of about 0 °C to about 15 °C. Then, in step **550**, the type of form and final presentation is selected for the cooked paste for its commercialization on the market as a cooked restructured meat product, for example, in step **560**, the cooked paste is shredded in a meat shredder to give it the form of shredded meat; or, in step **570**, the cooked paste is cut into a food cube cutter to give it the shape of lump meat or meat strips; or, in step **580**, the cooked paste is chopped to give it the shape of ground meat. Alternatively, the cooked and ground paste is bonded in the form of meatballs. Once the cooked paste receives its shape, it is fried in a fryer under the following operating conditions:
i) The residence time in the fryer is of about 10 seconds to about 200 seconds;
ii) The frying temperature is of about 150 °C to about 250 °C;
iii) The molded or extruded paste reaches an internal temperature of about 70 °C to 80 °C in the fryer.

Then, in step **590**, the paste that is cooked and formed, is cooled to reach a temperature of about 0 °C to about 15 °C. Alternatively, sauces are added to prepare said cooked and formed paste. Finally, in step **600**, the cooked restructured meat product is packaged.

Figure 10 is a block diagram of alternatives of the processes embodiment to give the cooked paste a form for the process described above in Figure 6, and in order to obtain a similar presentation of a meat product according to this invention. In this embodiment, the process starts in step **610**, where the type of form and final presentation are selected for the cooked paste for its commercialization on the market as a cooked restructured meat product, for example, in step **620**, the cooked paste is shredded in a meat shredder to give it the form of shredded meat; or, in step **630**, the cooked paste is chopped in a meat grinder to give it the shape of ground meat. Alternatively, the cooked and ground paste is bonded in the form of meatballs. Then, in step **640**, the paste that is cooked and formed, is cooled to reach a temperature of about 0 °C to about 15 °C. Alternatively, sauces are added to prepare said cooked and formed paste. Finally, in step **650**, the cooked restructured meat is packaged.

### EXAMPLES OF EMBODIMENTS OF THE INVENTION

Next, several examples of embodiments are listed, each of which describes how to obtain an exemplary mode different from a cooked restructured meat product of this invention.

### EXAMPLE 1

An amount of 500 kg of vegetable protein in the form of pellet is vacuum-hydrated and mixed with 1500 liters of water and 15 kg of caramel color. Hydration and mixing is performed under vacuum during approximately 70 min with the paddles of the mixer rotating at 18 rpm in alternating cycles of rotation with each cycle lasting about 3 min, the pressure applied is approximately -90 kPa.

Once hydrated and mixed, the vegetable protein is mixed with the following ingredients, added in a dose of:

| | |
|---|---|
| Beef Fat: | 150 kg |
| Cut Beef: | 100 kg |
| Chicken Paste: | 1900 kg |
| Refined Salt: | 45 kg |
| Sodium Nitrite: | 1 kg |
| Preservatives: | 25 kg |

The mixture is first performed in a mixer with an open lid during 40 minutes with the paddles of the mixer rotating at 18 rpm in alternating cycles of rotation with each cycle lasting about 7 min. Next, the mixer is closed to perform a second mixing stage under vacuum, during approximately 20 minutes with the paddles of the mixer rotating at 35 rpm in alternating cycles of rotation with each cycle lasting about 5 minutes; while the pressure applied is approximately -90 kPa.

Subsequently, 350 kg of texturised units are mixed to the mixture obtained. This mixture is first performed in a mixer with an open lid during approximately 10 minutes with the paddles of the mixer rotating at 18 rpm in alternating cycles of rotation with each cycle lasting about 3 minutes. Next, the second mixing stage, during approximately 5 minutes, is applied to change the turn of the paddles to 35 rpm in alternating cycles of rotation with each cycle lasting about 5 minutes. Later, the mixer is closed to perform a third mixing stage under vacuum, during approximately 12 minutes with the paddles of the mixer rotating at 35 rpm in alternating cycles of rotation with each cycle lasting about 5 minutes; while the pressure applied is approximately -90 kPa. The temperature of the prepared paste is 4 °C.

Once prepared, the paste is portioned in portions of 100 gr. These portions of prepared paste to produce the restructured meat products are subject to the following conditions of operation in the electric TwinGrill Modelo TWG3600/600 Series 614 oven:
i) The residence time in oven is of about 70 seconds;
ii) The temperature of the upper and lower heating panels of the oven is of about 120 °C;
iii) The separation between the upper and lower conveyor belts of the oven is 10 mm;
iv) Both panels being in contact with the prepared paste portions.

The portions of cooked restructured meat product are cooled to reach a temperature of 8 °C. And finally, sauces are added to obtain a cooked restructured meat that is packaged. The product thus obtained is shown in Figures 3 and 4.

The cooked restructured meat products obtained by this process of rolling and generally cooked in a manner generally simultaneous and homogeneous, are products that are formed automatically with the appearance, for example, of steak, cutlet, skirt steak or cured meat, which can be marinated to obtain a cooked restructured meat product with the appearance, for example of marinated meat; or may be breaded in order to obtain a cooked restructured meat product with the appearance, for example, of breaded skirt steak or breaded veal cutlet, which can then be fried to produce a cooked restructured meat product with the appearance, for example, of veal escalope. The cooked portions of the restructured meat product are cooled to reach a temperature of 10 °C. And finally, sauces are added to obtain a cooked restructured meat product that is packaged. The product thus obtained is shown in Figures 3 and 4.

### EXAMPLE 2

With 250 kg of the paste prepared in Example 1, it is proceeded to cook it in a cooking pot by stirring it in three stages of cooking under the following operating conditions:

| | |
|---|---|
| Temperature of the pot: | 40 °C |
| Cooking time: | 10 min |
| Turning of the pot: | 40 rpm |

First cooking phase of the pot with the following conditions:

| | |
|---|---|
| Temperature of the pot (steam): | 75 °C |
| Cooking time: | 25 min |
| Turning of the pot: | 10 rpm |
| Temperature of the paste: | 60 °C |

Second cooking phase of the pot with the following conditions:

| | |
|---|---|
| Temperature of the pot (steam): | 75 °C |
| Cooking time: | 15 min |
| Turning of the pot: | 30 rpm |
| Temperature of the paste: | 60 °C |

Third cooking phase of the pot with the following conditions:

| | |
|---|---|
| Temperature of the pot (no steam): | 75 °C |
| Cooking Time: | 15 min |
| Turning of the pot: | 10 rpm |
| Temperature of the paste: | 72 °C |

Once the prepared paste is cooked as a cooked restructured meat product, it is shredded in a meat shredder to give it the form of shredded meat; that later is cooled to reach a temperature of 8 °C. And finally, sauces are added to obtain a cooked restructured meat that is packaged.

Based on the embodiments described above, it is considered that the modifications to the environments of these embodiments, as well as to the environments of alternate embodiments will be considered evident for an expert in the state of the art under the present description. Therefore, it is considered that the claims cover those modifications and alternatives that are within the scope of the present invention or its equivalents.

## Claims

1. A process for preparing a cooked restructured meat product, comprising the steps of:
hydrating under vacuum at least one vegetable protein mixed with water and at least one colorant;
mixing at least one meat product with the mixture of hydrated and colored vegetable protein;
mixing texturised units with the mixture of meat products and hydrated and colored vegetable protein obtaining a prepared paste;
cooking the prepared paste; and
forming the cooked paste in a desired shape;
the process is **characterized in that** the step of cooking the prepared paste includes the steps of:
(a) portioning the prepared paste in portions from 50 to 150 grams, rolling the portions and cooking the portions in a simultaneous and homogeneous manner on its upper and lower surface in an oven including an upper heating panel and a lower heating panel, both panels being in contact with said paste at a temperature from 100 to 150 °C; or
(b) stuffing the prepared paste in a natural or artificial wrapping; and cooking it in an oven or cook kettle until that the prepared paste reaches an internal temperature from 70 to 80 °C; or
(c) cooking the prepared paste in a cooking pot while stirring the prepared paste until that the prepared paste reaches an internal temperature from 70 to 80 °C.

2. The process of claim 1, **characterized in that** the step of hydrating under vacuum of at least one vegetable protein mixed with water and at least one colorant including the step of:
mixing the vegetable protein, water and colorant in a mixer with paddles spinning clockwise from 10 to 20 rpm, and counterclockwise each turn from 2 to 10 min; wherein the mixture is obtained under vacuum during a period from 40 to 80 min, and at a pressure from -100 kPa to -50 kPa.

3. The process of claim 1, **characterized in that** the step of mixing at least one meat product with the hydrated and colored vegetable protein includes the steps of:
mixing the hydrated and colored vegetable protein with the meat products in a mixer with paddles spinning clockwise from 10 to 20 rpm, and counterclockwise each turn from 2 to 10 min, wherein the mixture is obtained during a period from 15 to 45 min; and
mixing the meat products with hydrated and colored vegetable protein in a mixer with paddles spinning clockwise from 20 to 40 rpm, and counterclockwise each turn from 2 to 10 min, wherein the mixture is obtained under vacuum during a period from 10 to 20 min, and at a pressure from -100 kPa to -50 kPa.

4. The process of claim 1, **characterized in that** the step of mixing texturised units with the meat products and hydrated and colored vegetable protein, obtaining a prepared paste, includes the steps of:
mixing the meat products and hydrated and colored vegetable protein with the texturised units in a mixer with paddles spinning clockwise from 10 to 20 rpm, and counterclockwise each turn from 2 to 10 min, wherein the mixture is obtained during a period from 5 to 20 min;
mixing the meat products, hydrated and colored vegetable protein, and said texturised units in a mixer with paddles spinning clockwise from 20 to 40 rpm, and counterclockwise each turn from 2 to 10 min; wherein the mixture is obtained during a period from 3 to 10 min; and
mixing the meat products, hydrated and colored vegetable protein and the texturised units in a mixer with paddles spinning clockwise from 20 to 40 rpm, and counterclockwise for each turn from 2 to 10 min, wherein the mixture is obtained under vacuum during a period from 10 to 20 min, and at a pressure from -100 kPa to -50 kPa.

5. The process of claim 1, **characterized in that** in the step of portioning the prepared paste in portions from 50 to 150 grams, rolling the portions and cooking the portions, the portions has a residence time from 10 to 120 seconds into the oven with an upper heating panel and a lower heating panel, and the upper heating panel and lower heating panel are separated from 6 to 15 mm.

6. The process of claim 1, **characterized in that** the step of forming the cooked paste in a desired shape includes the steps of:
cooling the cooked paste; and
shredding the cooked paste in a shredding machine to give it a shredded meat shape; or
cutting the cooked paste in a food cube cutter to give it a meat shape of lump meat or meat strips type; or
grinding the cooked paste in a meat mill to give it a ground meat shape.

7. The process of claim 6, **characterized in that** the step of cooling the cooked paste, the cooked paste reaches a temperature from 0 to 15 °C.

## Patentansprüche

1. Ein Verfahren zur Zubereitung von gegartem Formfleisch, bestehend aus folgenden Schritten:
Hydratisieren von mindestens einem mit Wasser und mindestens einem Farbstoff vermischten Pflanzenprotein unter Vakuum;
Vermischen mindestens eines Fleischerzeugnisses mit der Mischung aus hydratisiertem und gefärbtem Pflanzenprotein;
Vermischen von texturierten Einheiten mit der Mischung aus Fleischerzeugnissen und hydratisiertem und gefärbtem Pflanzenprotein, wodurch eine vorbereitete Paste entsteht;
Garen der vorbereiteten Paste und
Formen der gegarten Paste nach Wunsch.
Das Verfahren ist **dadurch gekennzeichnet, dass** der Vorgang zum Garen der vorbereiteten Paste aus folgenden Schritten besteht:
(a) Portionieren der vorbereiteten Paste in Portionen von 50 bis 150 Gramm, Rollen der Portionen und gleichzeitiges und homogenes Garen auf deren Ober- und Unterseite bei 100 bis 150 °C in einem Ofen mit einer oberen Heizplatte und einer unteren Heizplatte, wobei beide Platten Kontakt mit der genannten Paste haben;
(b) Füllen der vorbereiteten Paste in eine natürliche oder künstliche Umhüllung und Garen in einem Ofen oder Kochkessel, bis die vorbereitete Paste eine Kerntemperatur von 70 bis 80 °C erreicht hat; oder
(c) Garen der vorbereiteten Paste in einem Kochtopf unter Rühren der vorbereiteten Paste, bis die vorbereitete Paste eine Kerntemperatur von 70 bis 80 °C erreicht hat.

2. Das in Anspruch 1 genannte Verfahren, **dadurch gekennzeichnet, dass** der Vorgang zum Hydratisieren unter Vakuum von mindestens einem Pflanzenprotein, vermischt mit Wasser und mindestens einem Farbstoff, den folgenden Schritt umfasst:
Mischen von Pflanzenprotein, Wasser und Farbstoff in einem Mischer mit Schaufelrührer, der sich mit 10-20 U/min jeweils 2 bis 10 Minuten im Uhrzeigersinn und gegen den Uhrzeigersinn dreht, wobei die Mischung unter Vakuum während eines 40 bis 80 Minuten dauernden Zeitraums bei einem Druck von -100 kPa bis -50 kPa erzeugt wird.

3. Das in Anspruch 1 genannte Verfahren, **dadurch gekennzeichnet, dass** der Vorgang des Mischens von mindestens einem Fleischerzeugnis mit dem hydratisierten und gefärbten Pflanzenprotein die folgenden Schritte umfasst;
Mischen des hydratisierten und gefärbten Pflanzenproteins mit den Fleischerzeugnissen in einer Rührmaschine mit Schaufeln, die sich mit 10-20 U/min jeweils 2 bis 10 Minuten im Uhrzeigersinn und gegen den Uhrzeigersinn dreht, wobei die Mischung während eines 15 bis 45 Minuten dauernden Zeitraums erzeugt wird; und
Mischen der Fleischerzeugnisse mit hydratisiertem und gefärbtem Pflanzenprotein in einer Rührmaschine mit Schaufeln, die sich mit 20-40 U/min jeweils 2 bis 10 Minuten im Uhrzeigersinn und gegen den Uhrzeigersinn dreht, wobei die Mischung unter Vakuum während eines 10 bis 20 Minuten dauernden Zeitraums bei einem Druck von -100 kPa bis -50 kPa erzeugt wird.

4. Das in Anspruch 1 genannte Verfahren, **dadurch gekennzeichnet, dass** der Vorgang des Mischens von texturierten Einheiten mit den Fleischerzeugnissen und dem hydratisierten und gefärbten Pflanzenprotein, durch den eine vorbereitete Paste entsteht, die folgenden Schritte umfasst:
Vermischen der Fleischerzeugnisse und des hydratisierten und gefärbten Pflanzenproteins mit den texturierten Einheiten in einer Bohrmaschine mit Schaufeln, die sich mit 10-20 U/min jeweils 2 bis 10 Minuten im Uhrzeigersinn und gegen den Uhrzeigersinn bewegt, wobei die Mischung während eines 5 bis 20 Minuten dauernden Zeitraums erzeugt wird;
Mischen der Fleischerzeugnisse, des hydratisierten und gefärbten Pflanzenproteins und der genannten texturierten Einheiten in einer Rührmaschine mit Schaufeln, die sich mit 20-40 U/min jeweils 2 bis 10 Minuten im Uhrzeigersinn und gegen den Uhrzeigersinn bewegt, wobei die Mischung während eines 3 bis 10 Minuten dauernden Zeitraums erzeugt wird; und
Mischen der Fleischerzeugnisse, des hydratisiertem und gefärbten Pflanzenproteins und der genannten texturierten Einheiten in einer Rührmaschine mit Schaufeln, die sich mit 20-40 U/min jeweils 2 bis 10 Minuten im Uhrzeigersinn und gegen den Uhrzeigersinn bewegt, wobei die Mischung unter Vakuum während eines 10 bis 20 Minuten dauernden Zeitraums bei einem Druck von -100 kPa bis -50 kPa erzeugt wird.

5. Das in Anspruch 1 genannte Verfahren, **dadurch gekennzeichnet, dass** beim Schritt des Portionierens der vorbereiteten Paste in Portionen von 50 bis 150 Gramm, Rollen der Portionen und Garen der Portionen die Portionen eine Verweildauer von 10 bis 120 Sekunden in dem Ofen mit einer oberen Heizplatte und einer unteren Heizplatte haben, und die obere Heizplatte 6 bis 15 mm von der unteren Heizplatte entfernt ist.

6. Das in Anspruch 1 genannte Verfahren, **dadurch gekennzeichnet, dass** der Vorgang zum Formen der gegarten Paste nach Wunsch folgende Schritte umfasst:
Kühlen der gegarten Paste; und
Zerkleinern der gegarten Paste in einem Schnetzelgerät, um ihr die Form von geschnetzeltem Fleisch zu verleihen; oder
Schneiden der gegarten Paste in einem Würfelschneider, um ihr die Form von Fleischwürfeln oder Fleischstreifen zu verleihen; oder
Zerkleinern der gegarten Paste in einem Fleischwolf, um ihr die Form von Hackfleisch zu verleihen.

7. Das in Anspruch 6 genannte Verfahren, **dadurch gekennzeichnet, dass** während des Schrittes zum Kühlen der gegarten Paste die Paste eine Temperatur von 0 bis 15 °C erreicht.

## Revendications

1. Procédé de préparation d'un produit carné cuit restructuré, comprenant les étapes consistant à :
hydrater sous vide au moins une protéine végétale mélangée avec de l'eau et au moins un colorant ;
mélanger au moins un produit carné avec le mélange de protéine végétale hydratée et colorée ;
mélanger des unités texturées avec le mélange de produits carnés et de protéine végétale hydratée et colorée pour obtenir une pâte préparée ;
cuire la pâte préparée ; et
donner à la pâte cuite une forme désirée ;
le procédé est **caractérisé en ce que** l'étape de cuisson de la pâte préparée comprend les étapes consistant à :
(a) partager la pâte préparée en portions de 50 à 150 grammes, laminer les portions et cuire les portions de façon simultanée et homogène sur leur surface supérieure et inférieure dans un four comportant une plaque chauffante supérieure et une plaque chauffante inférieure, les deux plaques étant en contact avec ladite pâte à une température allant de 100 à 150°C ; ou
(b) fourrer la pâte préparée dans une enveloppe naturelle ou artificielle, et la faire cuire dans un four ou une marmite de cuisson jusqu'à ce que la pâte préparée atteigne une température interne de 70 à 80°C ; ou
(c) faire cuire la pâte préparée dans un fait-tout de cuisson tout en mélangeant la pâte préparée jusqu'à ce que la pâte préparée atteigne une température interne de 70 à 80°C.

2. Le procédé de la revendication 1, **caractérisé en ce que** l'étape d'hydratation sous vide d'au moins une protéine végétale mélangée avec de l'eau et au moins un colorant comprenant l'étape consistant à :
mélanger la protéine végétale, l'eau et le colorant dans un mixer avec spatules tournant dans le sens des aiguilles d'une montre de 10 à 20 tours/minute, et dans le sens contraire des aiguilles d'une montre à chaque tour de 2 à 10 mn ; dans lequel le mélange est obtenu sous vide durant une période de 40 à 80 mn, et à une pression de -100 kPa à -50kPa.

3. Le procédé de la revendication 1, **caractérisé en ce que** l'étape de mélange d'au moins un produit carné avec la protéine végétale hydratée et colorée comprend les étapes consistant à :
mélanger la protéine végétale hydratée et colorée avec les produits carnés dans un mixer avec spatules tournant dans le sens des aiguilles d'une montre de 10 à 20 tours/minute, et dans le sens contraire des aiguilles d'une montre à chaque tour de 2 à 10 mn, dans lequel le mélange est obtenu durant une période de 15 à 45 mn ; et
mélanger les produits carnés avec la protéine végétale hydratée et colorée dans un mixer avec spatules tournant dans le sens des aiguilles d'une montre de 20 à 40 tours/minute, et dans le sens contraire des aiguilles d'une montre à chaque tour de 2 à 10 mn, dans lequel le mélange est obtenu sous vide durant une période de 10 à 20 mn, et à une pression de -100 kPa à - 50kPa.

4. Le procédé de la revendication 1, **caractérisé en ce que** l'étape de mélange d'unités texturées avec les produits carnés et la protéine végétale hydratée et colorée, pour obtenir une pâte préparée, comprend les étapes consistant à :
mélanger les produits carnés et la protéine végétale hydratée et colorée avec les unités texturées dans un mixer avec spatules tournant dans le sens des aiguilles d'une montre de 10 à 20 tours/minute, et dans le sens contraire des aiguilles d'une montre à chaque tour de 2 à 10 mn, dans lequel le mélange est obtenu durant une période de 5 à 20 mn ;
mélanger les produits carnés, la protéine végétale hydratée et colorée, et lesdites unités texturées dans un mixer avec spatules tournant dans le sens des aiguilles d'une montre de 20 à 40 tours/minute, et dans le sens contraire des aiguilles d'une montre à chaque tour de 2 à 10 mn ; dans lequel le mélange est obtenu durant une période de 3 à 10 mn ; et
mélanger les produits carnés, la protéine végétale hydratée et colorée, et les unités texturées dans un mixer avec spatules tournant dans le sens des aiguilles d'une montre de 20 à 40 tours/minute, et dans le sens contraire des aiguilles d'une montre à chaque tour de 2 à 10 mn, dans lequel le mélange est obtenu sous vide durant une période de 10 à 20 mn, et à une pression de -100 kPa à -50kPa.

5. Le procédé de la revendication 1, **caractérisé en ce que** dans l'étape de partage en portions de pâte préparée de 50 à 150 grammes, de laminage des portions et de cuisson des portions, les portions restent durant 10 à 120 secondes dans le four comportant une plaque chauffante supérieure et une plaque chauffante inférieure, et la plaque chauffante supérieure et la plaque chauffante inférieure sont séparées de 6 à 15 mm.

6. Le procédé de la revendication 1, **caractérisé en ce que** l'étape consistant à donner à la pâte cuite une forme désirée comprend les étapes consistant à :
refroidir la pâte cuite ; et
déchiqueter la pâte cuite dans une machine à déchiqueter pour lui donner une forme de viande déchiquetée ; ou
découper la pâte cuite dans un appareil à découper en dés pour lui donner une forme de viande en morceau ou de viande en bandes ; ou
mouliner la pâte cuite dans un moulin à viande pour lui donner une forme de viande moulinée.

7. Le procédé de la revendication 6, **caractérisé en ce que** dans l'étape de refroidissement de la pâte cuite, la pâte cuite atteint une température de 0 à 15°C.
